Europäisches Patentamt

European Patent Office

Office européen des brevets

(19)

(11) Numéro de publication : **0 048 653**
**B1**

# (12) FASCICULE DE BREVET EUROPÉEN

(45) Date de publication du fascicule du brevet :
**19.12.84**

(21) Numéro de dépôt : **81401390.0**

(22) Date de dépôt : **07.09.81**

(51) Int. Cl.³ : **A 47 J 36/06**

(54) Récipient pour la cuisson des aliments avec couvercle à refroidissement.

(30) Priorité : **24.09.80 FR 8020458**

(43) Date de publication de la demande :
**31.03.82 Bulletin 82/13**

(45) Mention de la délivrance du brevet :
**19.12.84 Bulletin 84/51**

(84) Etats contractants désignés :
**AT BE CH DE GB IT LI LU NL SE**

(56) Documents cités :
**FR-A- 620 808**
**FR-A- 720 246**
**FR-A- 936 679**
**FR-A- 937 348**
**FR-E- 42 114**
**GB-A- 1 304 913**
**US-A- 1 625 847**

(73) Titulaire : **HAUT FOURNEAU ET FONDERIES DE COUSANCES AUX FORGES**
**Cousances les Forges**
**F-55170 Ancerville (FR)**

(72) Inventeur : **Schmitt, Paul**
**6, Les Grives**
**F-78170 La Celle Saint Cloud (FR)**

(74) Mandataire : **Rataboul, Michel**
**Cabinet Michel Rataboul 69, rue de Richelieu**
**F-75002 Paris (FR)**

Jouve, 18, rue St-Denis, 75001 Paris, France

## Description

On connaît déjà des récipients pour la cuisson des aliments tels que des cocottes en fonte dont le couvercle amovible est muni d'un creux dans lequel on peut verser de l'eau afin qu'elle refroidisse en vue de provoquer, à l'intérieur, la condensation des vapeurs de cuisson et le retour des vapeurs condensées vers les aliments.

On connaît, par exemple, les documents FR-A-720 246 et FR-E-42 114.

Ces documents décrivent une cocotte dont le couvercle présente une cavité pour de l'eau sur sa face destinée à être située à l'extérieur et qui est muni de petites protubérances sur sa face destinée à être à l'intérieur, ces deux moyens conjugués devant être situés au centre du couvercle afin que l'eau de condensation provenant des aliments puisse venir s'égoutter vers le milieu du récipient.

Comme cela est expliqué dans ces documents antérieurs, les moyens sont délibérément agencés pour éviter que les vapeurs condensées retombent dans une autre zone que la portion centrale présentée comme la plus chaude.

C'est également le cas du document FR-A-937 348 qui décrit une disposition exactement contraire à celle de la présente invention ainsi que cela résulte des explications données dans ce brevet page 1, colonne 1, lignes 4 à 17.

En effet, selon ce brevet, il faut s'opposer à l'écoulement des vapeurs condensées vers la périphérie du couvercle et vers les bords de la cocotte afin de provoquer, au contraire, la chute directe des condensats sur les aliments qui cuisent. A cet effet, ce brevet revendique la présence, sur la face interne du couvercle, de reliefs concentriques qui constituent autant d'obstacles à l'écoulement radial des vapeurs.

L'expérience a montré que ces dispositions donnent généralement satisfaction et constituent une amélioration très sensible par rapport aux cocottes traditionnelles.

Mais on a constaté qu'en regard des avantages obtenus, ces dispositions ont des inconvénients précisément par le fait que la condensation des vapeurs provoque la chute des gouttes condensées au-dessus de la zone centrale.

On pourrait penser que les explications données sont logiques mais cela est surtout vrai quand la cocotte est vide. Dès lors qu'elle contient des aliments tels qu'une pièce de viande, il est clair que les gouttes condensées tombent sur la viande et non sur le fond.

Le document FR-A-620 808 décrit un couvercle intermédiaire qui contient de l'eau et qui a un fond bombé.

Toutefois, on remarque tout particulièrement page 2, colonne 1, lignes 26 à 48 que le fonctionnement de ce système est lui aussi différent de celui de la présente invention puisqu'il est conçu pour provoquer l'évacuation des vapeurs de cuisson et leur captation à l'intérieur d'une enceinte close c'est-à-dire l'extraction continue des vapeurs.

Le document FR-A-936 679 décrit également un couvercle contenant de l'eau et présentant un fond bombé (page 1, colonne 2, lignes 1 et 2) mais l'on constate que ce couvercle est une capacité fermée dont l'usage s'assimile à celui d'une bouilloire, de sorte que l'eau qui y est introduite s'étend sur toute sa surface sans laisser subsister au centre une partie émergée.

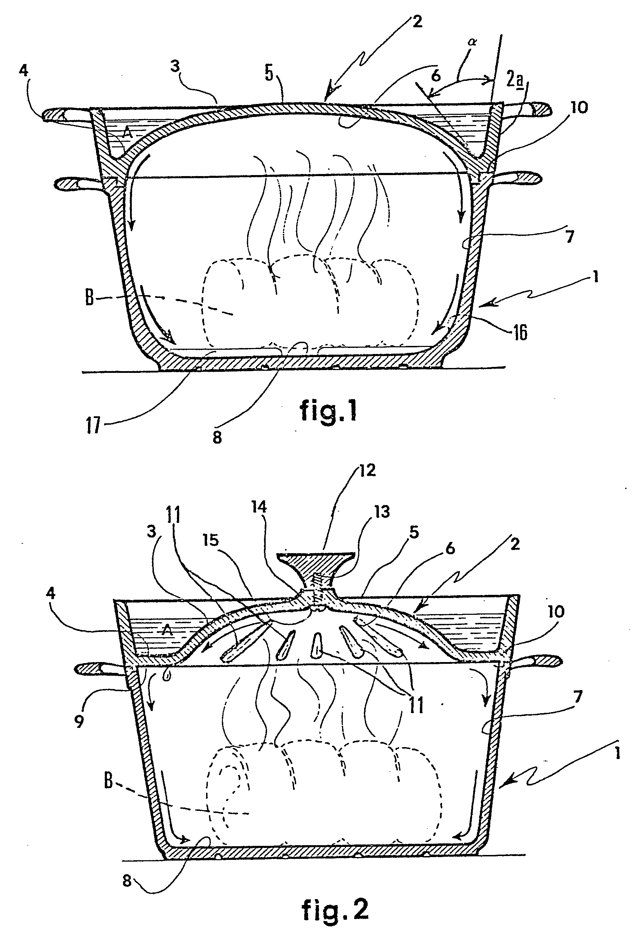

Le document US-A-1 625 847 peut être cité en raison de la morphologie de l'objet revendiqué, telle qu'elle est représentée sur la figure 2.

Lorsqu'on prend connaissance du texte lui-même, on constate (page 2, colonne 1, ligne 40 à colonne 2, ligne 36) que la forme du couvercle, de son bord et du rebord de la marmite sont étudiés pour obtenir un assujetissement étanche et qu'il n'est nulle part prévu de placer de l'eau dans le couvercle.

En outre, le couvercle représenté sur la figure 2 de ce brevet présente une telle proéminence que l'on ne peut plus parler d'une partie centrale plus ou moins recouverte d'eau, mais plutôt d'un simple espace annulaire dont la paroi circulaire située le plus près du centre est insuffisamment courbe pour obtenir l'effet recherché selon la présente invention.

Le document GB-A-1 304 913 n'est lui aussi cité qu'en raison des formes de cocottes représentées sur les figures 2 et 3.

Ce document, en effet, concerne le choix d'une céramique poreuse qui n'a rien de commun avec la présente invention. En revanche, on retrouve sur les figures 2 et 3 la présence de reliefs 3 mais leur disposition en segments parallèles est incompatible avec l'invention qui implique une liberté d'écoulement radial, c'est-à-dire sur les 360 degrés du couvercle.

La présente invention remédie à ces inconvénients et permet à l'eau condensée de revenir vers le fond du récipient non par le centre mais dans une zone périphérique.

A cette fin, l'invention a pour objet un récipient pour la cuisson des aliments, du type comprenant un corps creux sur lequel peut être placé un couvercle amovible dont la face devant être située à l'extérieur est munie d'un creux qui doit recevoir de l'eau, lequel creux est annulaire et est disposé autour d'une partie centrale convexe et surélevée dont le sommet est sensiblement au niveau des bords du creux, caractérisé en ce que le rebord le plus extérieur du creux annulaire est voisin du bord du couvercle, la profondeur d'eau augmentant depuis le centre jusqu'à la périphérie et en ce que la face du couvercle devant être située à l'intérieur du récipient a une forme substantiellement en voûte qui s'étend de manière continue et régulière du centre du couvercle vers la périphérie de ce dernier et qui tend à se raccorder aux parois intérieures du corps.

Selon d'autres caractéristiques de l'invention :
— la face du couvercle devant être située à l'intérieur du récipient comprend une zone périphérique plate ;

— la face du couvercle devant être située à l'intérieur du récipient est munie de reliefs dont la forme et la disposition sont établies pour favoriser le cheminement radial de vapeurs condensées depuis la zone centrale vers la totalité de la zone périphérique et pour accroître le refroidissement de ces vapeurs ;

— les reliefs s'étendent radialement ;

— les reliefs s'étendent dans la zone périphérique mais non jusqu'à leur centre commun ;

L'invention sera mieux comprise par la description détaillée ci-après faite en référence au dessin annexé. Bien entendu, la description et le dessin ne sont donnés qu'à titre d'exemple indicatif et non limitatif.

La figure 1 est une vue en coupe d'une cocotte en fonte munie d'un couvercle amovible selon un premier mode de réalisation.

La figure 2 est une vue en coupe d'une cocotte selon un deuxième mode de réalisation de l'invention.

Selon l'invention, un récipient pour la cuisson des aliments est du type comprenant un corps creux 1 sur lequel peut être placé un couvercle amovible 2 dont la face 3 devant être située à l'extérieur est munie d'un creux 4 pour recevoir de l'eau A et est caractérisé en ce que le creux 4 est annulaire et disposé autour d'une partie centrale convexe et surélevée 5 dont le sommet est sensiblement au niveau des bords du creux 4, afin que la profondeur d'eau augmente depuis le centre jusqu'à la périphérie et en ce que la face 6 du couvercle 2 devant être située à l'intérieur a une forme sensiblement en voûte qui tend à se raccorder aux parois intérieures 7 du corps 1.

Avec ces dispositions, on voit qu'un aliment à cuire B, tel qu'une pièce de viande, est placé au centre du corps 1 et que les vapeurs qui résultent de la cuisson rencontrent la face 6 du couvercle 2 qui, en son centre, est lisse de sorte que la forme en voûte de cette paroi et l'absence de protubérances provoquent la migration des vapeurs vers la périphérie du couvercle 2 à l'aplomb de l'espace annulaire 4 rempli d'eau A, cette périphérie étant de ce fait une zone relativement froide où les vapeurs finissent de se condenser pour former des gouttelettes.

La forme en voûte de la paroi 6 tend à se raccorder le mieux possible avec les parois 7 du corps 1, de sorte que les gouttelettes coulent le long de ces parois où elles se réchauffent avant d'atteindre le fond 8.

Cette circulation se fait donc dans le sens ascendant au centre du récipient et dans le sens descendant à sa périphérie.

Les gouttes condensées sont non seulement réchauffées avant d'atteindre le fond 8, mais sont empêchées de tomber au centre du récipient, contrairement à ce qui est connu jusqu'à ce jour.

Selon une caractéristique de l'invention, la face 6 du couvercle 2 est inclinée régulièrement et continuement depuis son sommet situé dans la zone centrale, jusqu'à sa base située à la périphérie.

Avec ces dispositions, rien ne s'oppose au cheminement radial des vapeurs et des condensats jusqu'au bord le plus bas du couvercle 2.

Cependant, cette solution peut poser des problèmes de fabrication délicats lorsqu'il s'agit, par exemple, d'obtenir le récipient 1 et le couvercle 2 par coulée de fonte dans un moule au sable.

En effet, l'angle $\alpha$ formé par la tangente à la courbe de la voûte et le bord 2a du couvercle 2 est aigu et laisse subsister peu de matière, ce qui crée une ligne fragile.

En se reportant à la figure 2, on voit que selon une caractéristique de l'invention, la face 6 du couvercle 2 devant être située à l'intérieur comprend une zone périphérique plate 9.

Cette zone 9 se trouve à l'aplomb du creux 4 dans sa partie la plus profonde qui contient le plus d'eau A et où il en subsite encore quand le reste s'est évaporé. C'est donc l'endroit le mieux refroidi et celui où la condensation est maximale.

Depuis le centre jusqu'à la périphérie, les vapeurs subissent, ainsi, une condensation non uniforme mais progressive. Les gouttes qui résultent de la condensation totale des vapeurs tombent de la zone 9, autour d'une pièce de viande B, par exemple.

Un rebord 10 permet, néanmoins, le raccordement de la face 6 aux parois 7 pour favoriser l'écoulement des gouttes le long de ces parois 7 sur lesquelles elles se réchauffent avant d'atteindre le fond 8.

Selon une caractéristique de l'invention, la face 6 du couvercle 2 est munie de reliefs 11 dont la forme et la disposition sont établies pour favoriser le cheminement radial des vapeurs condensées depuis la zone centrale vers la totalité de la zone périphérique et pour accroître le refroidissement de ces vapeurs.

Comme il faut conduire les vapeurs condensées jusqu'aux parois 7 du corps 1 pour au moins la plus grande partie d'entre elles, les reliefs 11 ne doivent pas constituer des obstacles transversaux au cheminement radial et peuvent se situer loin du centre pour que leurs protubérances ne provoquent pas la chute des gouttelettes dans la partie centrale du récipient.

C'est pourquoi, selon un mode de réalisation préféré de l'invention, les reliefs 11 s'étendent radialement (figure 2).

C'est également pour cette raison que les reliefs 11 sont prévus dans la zone périphérique mais non jusqu'à leur centre virtuel commun.

La partie centrale surélevée 5 est convexe et présente la même forme que la face 6. Cette forme extérieure en dôme correspond à la forme intérieure en voûte. Comme l'eau A s'étend toujours horizontalement, il en résulte que la profondeur d'eau augmente depuis le centre jusqu'à la périphérie, ce qui accroît l'effet de condensation progressive décrit plus haut.

Le centre du couvercle 2 reçoit, ici, un bouton 12 avantageusement isolant, fixé par une vis 13 au sommet d'un relief extérieur 14 correspondant à un creux intérieur 15 dans lequel la vis 13 est logée. Ces dispositions, loin d'affaiblir les effets de l'invention, viennent les renforcer en créant une petite zone centrale très chaude puisque l'eau A ne peut pas la recouvrir. Les vapeurs qui atteignent le creux 15 ne sont pas condensées et le quittent radialement, comme décrit.

Cependant, pour des raisons de stabilité lors des manipulations, on peut prévoir des poignées latérales plutôt qu'un bouton central 12.

Sur la figure 1, on voit une variante de l'invention selon laquelle les parois 7 et le fond 8 du corps 1 sont raccordés par un congé 16 qui s'étend selon une large courbe destinée à favoriser l'écoulement des vapeurs condensées vers le centre du fond 8.

Selon une variante de ce mode de réalisation, l'intérieur du corps 1 et l'intérieur 6 du couvercle 2 constituent ensemble un volume sphéroïdal quasi continu.

Ainsi, on obtient une surface pratiquement continue propice au cheminement périphérique des vapeurs condensées depuis le sommet du couvercle jusqu'à la base du fond 8.

Pour aider les gouttes à passer sous les aliments (tels qu'une pièce de viande B) la zone centrale du fond 8 du corps 1 peut être munie de reliefs substantiellement radiaux 17.

Une variante de cette disposition prévoit que la zone centrale du fond 8 du corps 1 présente une cavité tandis que les reliefs radiaux sont, en fait, dans le même plan que le fond 8.

Avec ces dispositions, les aliments à cuire tels que la pièce de viande B reposent sur les reliefs 17 et les vapeurs condensées qui coulent le long des parois 7 atteignent la partie centrale du fond 8 en cheminant entre les reliefs ou en se mélangeant à la sauce du mets, mais de toutes façons sans tomber directement sur la viande B.

Lorsque le corps 1 est entièrement sphéroïdal comme cela se voit sur la figure 1, ses parois extérieures peuvent avoir une forme un peu différente si l'on veut obtenir des épaisseurs variables des parois.

**Revendications**

1. Récipient pour la cuisson des aliments, du type comprenant un corps creux (1) sur lequel peut être placé un couvercle amovible (2) dont la face (3) devant être située à l'extérieur est munie d'un creux (4) qui doit recevoir de l'eau (A), lequel creux est annulaire et est disposé autour d'une partie centrale convexe et surélevée (5) dont le sommet est sensiblement au niveau des bords du creux (4), caractérisé en ce que le rebord le plus extérieur du creux annulaire (4) est voisin du bord (2a) du couvercle (2) la profondeur d'eau augmentant depuis le centre jusqu'à la périphérie et en ce que la face (6) du couvercle (2) devant être située à l'intérieur du récipient (1) a une forme substantiellement en voûte qui s'étend de manière continue et régulière du centre du couvercle (2) vers la périphérie de ce dernier et qui tend à se raccorder aux parois intérieures (7) du corps (1).

2. Récipient selon la revendication 1, caractérisé en ce que la face (6) du couvercle (2) devant être située à l'intérieur du récipient (1) comprend une zone périphérique plate (9).

3. Récipient selon la revendication 1, caractérisé en ce que la face (6) du couvercle (2) devant être située à l'intérieur est munie de reliefs (11) dont la forme et la disposition sont établies pour favoriser le cheminement radial de vapeurs condensées depuis la zone centrale vers la totalité de la zone périphérique et pour accroître le refroidissement de ces vapeurs.

4. Récipients selon la revendication 3, caractérisé en ce que les reliefs (11) s'étendent radialement.

5. Récipient selon la revendication 4, caractérisé en ce que les reliefs (11) s'étendent dans la zone périphérique mais non jusqu'à leur centre commun.

**Claims**

1. A container for cooking foodstuffs, of the type comprising a hollow body (1) on which may be placed a removable cover (2) of which the surface (3) facing towards the exterior is provided with a hollow (4) which can receive water (A), which hollow is annular and is disposed around a convex and raised central part (5) of which the summit is substantially at the level of the border of the hollow (4), characterised in that the most exterior rim or edge of the annular hollow (4) is close to the edge (2a) of the cover (2), the depth of water increasing from the centre to the periphery, and in that the surface (6) of the cover which is situated towards the interior of the container (1) has a substantially domed form which extends in a continuous and regular manner from the centre of the cover (2) towards the periphery of this latter and which extends to join with the interior wall (7) of the body (1).

2. Container according to claim 1, characterised in that the surface (6) of the cover (2) which is situated towards the interior of the container (1) comprises a flat peripheral zone (9).

3. Container according to claim 1, characterised in that the surface (6) of the cover (2) which is situated towards the interior is provided with reliefs (11) of which the form and the disposition are such as to favour the radial flow of condensed vapours from the central zone towards the whole of the peripheral zone and to increase the cooling of these vapours.

4. Container according to claim 3, characterised in that the reliefs (11) extend radially.

5. Container according to claim 4, characterised in that the reliefs (11) extend in the peripheral zone but not up to their common centre.

**Ansprüche**

1. Kochtopf für Nahrungsmittel mit einem Hohlkörper (1), auf dem ein abnehmbarer Deckel (2) angeordnet werden kann, dessen Außenseite (3) eine Mulde (4) zur Aufnahme von Wasser aufweist, wobei die Mulde ringförmig ausgebildet und um einen ansteigenden, konvexen Mittelteil (5), dessen Scheitel etwa auf der Höhe des Randes der Mulde (4) liegt, angeordnet ist, dadurch gekennzeichnet, daß der Außenrand der ringförmigen Mulde (4) in der Nähe des Randes (2a) des Deckels (2) liegt, die Wassertiefe von der Mitte bis zum Rand zunimmt und die zum Topf (1) gerichtete Innenseite (6) des Deckels (2) im wesentlichen die Form eines Gewölbes hat, das sich gleichförmig und kontinuierlich von der Mitte des Deckels (2) zum Rand hin erstreckt und an die Innenwände (7) des Topfes (1) anschließt.

2. Kochtopf nach Anspruch 1, dadurch gekennzeichnet, daß die zum Topf (1) gerichtete Innenseite (6) des Deckels (2) einen flachen Randbereich (9) aufweist.

3. Kochtopf nach Anspruch 1, dadurch gekennzeichnet, daß die Innenseite (6) des Deckels (2) Reliefs (11) aufweist, deren Form und Anordnung so ausgelegt ist, daß der radiale Fluß des kondensierten Dampfs von der Mitte auf den gesamten Rand zu und die Dampfabkühlung verbessert ist.

4. Kochtopf nach Anspruch 3, dadurch gekennzeichnet, daß die Reliefs (11) radial verlaufen.

5. Kochtopf nach Anspruch 4, dadurch gekennzeichnet, daß die Reliefs (11) sich bis zur Randzone, aber nicht bis zu deren gemeinsamen Mittelpunkt hin erstrecken.

fig.1

fig.2